# EUROPEAN PATENT SPECIFICATION

(11) **EP 0 372 539 B1**
(45) Date of publication and mention of the grant of the patent: **08.03.1995**
(21) Application number: 89122538.5
(22) Date of filing: 06.12.1989
(51) Int. Cl.: C08G 18/48, C08J 9/08

(54) **Polyol composition, polyisocyanate-based foams prepared therefrom and process for preparing the same**
Polyolzusammensetzung, daraus hergestellte, auf Polyisocyanat basierende Schäume und Verfahren zu deren Herstellung
Composition de polyol, mousses à partir de polyisocyanate préparées à partir de celle-ci et procédé pour sa préparation

(30) Priority: 07.12.1988 US 280860
(43) Date of publication of application: 13.06.1990
(73) Proprietor: THE DOW CHEMICAL COMPANY, Midland Michigan 48640-1967 (US)
(72) Inventor: Grunbauer, Henri Jacobus Marie, NL-4501 HC Oostburg (NL); Thoen, Johan A., NL-4535 HB Terneuzen (NL); Smits, Guido Freddy, B-2110 Wijnegem (BE)
(74) Representative: Huber, Bernhard, Dipl.-Chem.

(56) References cited:
- EP-A- 0 308 733
- US-A- 4 273 882
- US-A- 4 585 858
- CHEMICAL ABSTRACTS, vol. 90, no. 14, April 1979, page 41, abstract no. 104906z,Columbus, Ohio, US; & JP-A-78130800
- KUNSTSTOFFE, vol. 72, no. 2, May 1982, pages 279-282, Munich, DE; W.KLINGELHÖFER: "Alternativen zu Fluorkohlenwasserstoff als Treibmittel fürPolyurethan-Hartschaumsysteme"

## Description

This invention relates to the preparation of rigid closed-cell polyisocyanate-based foams, particularly polyurethane or polyurethane-modified polyisocyanurate foams where the use of hard CFC blowing agents is minimized or eliminated.

It is well-known to prepare foamed, closed-cell materials by the reaction of polyisocyanates with active hydrogen-containing materials in the presence of blowing agents. Typically these blowing agents are organic compounds which boil or decompose to give gaseous products at temperatures convenient for foam preparation. Especially useful in the preparation of rigid polyisocyanate-based foams are the halocarbon blowing agents which, in addition to blowing, provide enhancement of other physical properties, e.g., thermal insulation. The most commonly employed halocarbons are the Refrigerants R-11, R-12 and R-113, sometimes referred to as "hard" halocarbons.

The "hard" halocarbons are those in which all hydrogens of the alkane have been replaced by a halogen, normally fluorine or chlorine. These halocarbons, also called chlorofluorocarbons (CFC) are stable in the environment and generally are not degraded before reaching the upper strata of the atmosphere. At the upper stratum of the atmosphere, theoretically, they are thought to participate in, and change the free radical reactions and chemical equilibrium associated with the balance of the composition of the atmosphere, see "Ozone Studies in Antarctica" by J. Farman, New Scientist, p. 49 (November 12, 1987). Accordingly, it is highly desirable to replace all hard blowing agents with alternative products which are not considered to influence or change the composition and equilibriums of the upper atmosphere.

One possible means is to replace hard halocarbons with "soft" halocarbon blowing agents in the preparation of foams. Soft halocarbon blowing agents are those which contain at least one hydrogen atom from the corresponding alkane in addition to the halogens, normally chlorine and fluorine. Such compounds are more readily degraded in the lower strata of the atmosphere and therefore significantly less reaches the upper strata of the atmosphere. Several "soft" CFCs exist which have boiling points and physical properties similar to the commonly used hard CFCs. The use of such blowing agents in the preparation of polyurethane foams has been discussed (see, for example, U.S. Patents 4,636,529 and 4,076,644).

However, the use of soft CFCs in the preparation of polyurethane foam has been limited due to their restricted commercial availability and high pricing in comparison to the most commonly used hard CFCs.

An alternative means of replacing hard CFCs in the preparation of polyurethane foam is to use water. Water reacts with the isocyanate, generating carbon dioxide which then causes the reaction mixture to expand and attain a cellular structure. The use of water in the preparation of open-celled flexible polyurethane foams is well-established, where it comprises the major portion or all of the total blowing agent requirement. However, water has not successfully been used as the major or total portion of blowing agent in the preparation of closed-cell rigid polyurethane foams suitable for insulative applications. Frequently, when water is used at such levels it is necessary to use polyols of sufficient low viscosity for processing which could lead to the production of, poor quality foams displaying a high degree of friability, low compressive strengths and high open-cell contents. Foams with a high open-cell content exhibit poorer thermal insulation properties than corresponding foams with a high closed-cell content. In addition, the use of water has not until now been economically interesting due to the greatly increased consumption of costly isocyanate.

US 4,585,858 discloses polyether products of starch with several different etherifying agents. Also disclosed are the hydrolyzates of the starch polyethers and methods of producing the starch polyethers by base-catalyzed reactions are described. Several applications for the polyether products are described, including rigid and flexible polyurethane foams.

U.S. Patent 4,273,882 teaches the preparation of polyurethane foams using water as the major portion of the blowing agent. The foams are prepared in the absence of catalyst and display a high open-cell content. U.S. Patent 3,965,052 teaches a process for the preparation of low smoke-generating polyisocyanate foams. Polyols are reacted with at least three chemical equivalents of polyisocyanate in the presence of hard CFC and from two to six parts by weight water. Foams prepared with different quantities of water and less polyisocyanate are said to display poor rigidity, compressive strengths and dimensional stability.

It is therefore desirable to provide a process for the preparation of rigid, closed-cell polyurethane foam or polyurea-modified polyurethane foam where water can be successfully used as the major portion of the blowing agent, thereby reducing or eliminating the need for hard chlorofluorocarbon blowing agents, and producing foams having desirable physical properties including thermal insulation properties.

It has now been discovered that rigid, closed-cell polyurethane foams of good physical properties including low friability, good compressive strengths and dimensional stability can be prepared when the blowing agent comprises water and when the polyol composition reacting with the isocyanate is modified to comprise a high functionality, high molecular weight polyol component.

In one aspect, this invention is a process for preparing a rigid closed-cell polyisocyanate-based polymer having an average density of from 15 to 40 kg/m³, by subjecting to foaming conditions a reactive mixture comprising an organic polyisocyanate, a polyol composition, and a blowing agent characterized in that:
(a) the polyol composition has an average hydroxyl number of from 100 to 500 and comprises at least 50 percent by weight of the total weight of the polyol composition of a polyol component having an average hydroxyl number of from 100 to 500, an average functionality of from 4 to 8 and being the product of reacting an alkylene oxide with a carbohydrate or carbohydrate mixture additionally containing water, glycerine or trimethylolpropane; or an aromatic initiator containing at least 4 active hydrogen atoms per molecule;
(b) the blowing agent comprises water in an amount of from 2.5 to 10 percent by weight of the total weight of the polyol composition and being sufficient to provide at least 40 theoretical mole percent carbon dioxide, by reaction with the polyisocyanate, of the total gases present in the closed-cells of the resulting polymer; and
(c) the polyisocyanate, present in an amount so as to provide from 1 to 1.5 isocyanate groups per active hydrogen atom present in the polyol composition and water, is a polymethylene polyphenyl polyisocyanate having an average functionality of from 2.4 to 3.1.

In another aspect, this invention is a closed-cell polyisocyanate-based foam prepared by the process of this invention.

In yet another aspect, this invention is a polyol composition for use in preparing a closed-celled polyurethane foam by the process of this invention.

Surprisingly, this invention provides for the use of polyether polyols which previously were not considered for the preparation of closed-cell rigid polyurethane foam due to their tendency to give poor quality foam properties such as poor compressive strengths and dimensional stability. Even more surprisingly the use of such polyols in combination with water which generates carbon dioxide as the blowing agent, provides a rigid closed-cell polymer exhibiting good thermal and physical characteristics, as well as excellent processing characteristics and greatly minimizes or eliminates the necessity to use halocarbon blowing agents, especially "hard" CFC blowing agents.

As described hereinabove, the polyol composition utilized in the process for preparing the rigid polyurethane foam in accordance with this invention comprises a high functionality, high equivalent weight polyol which, optionally, in admixture with other polyols, catalysts, surfactant, blowing agent and additives, can be reacted with a polyisocyanate to produce polyurethane foams.

The high functionality, high molecular weight polyol component is prepared by reacting a suitable initiator containing active hydrogen atoms with alkylene oxide. Suitable initiators are those containing at least 4 active hydrogen atoms per molecule or combinations of initiators where the mole average of active hydrogen atoms per molecule is from 4 to 8, and preferably from 6 to 8. Active hydrogen atoms are defined as those hydrogen atoms which are observed in the well-known Zerewitinoff test, see Kohler, *Journal of the American Chemical Society*, p. 3181, Vol. 49 (1927). Representative of such groups containing active hydrogen atoms include -OH, -COOH, -SH and -NHR where R is H or alkyl, or an aryl aromatic group.

Examples of suitable initiators comprise pentaerythritol, carbohydrate compounds such as lactose, α-methylglucoside, α-hydroxyethylglucoside, hexitol, heptitol, sorbitol, dextrose, manitol and sucrose. Examples of suitable aromatic initiators containing at least four active hydrogen atoms per molecule include aromatic amines such as toluene diamine and methane diphenylamine, the reaction product of a phenol with formaldehyde, and the reaction product of a phenol with formaldehyde and a dialkanolamine such as described by U.S. Patents 3,297,597; 4,137,265 and 4,383,102. Other suitable initiators which are used in combination with the initiators containing at least four active hydrogen atoms per molecule are water, glycerine, trimethylolpropane, hexane triol and aminoethylpiperazine. These initiators contain less than four active hydrogen atoms per molecule and therefore can only be employed in quantities such that the total mole average of active hydrogen atoms per molecule remains at least four or more. Particularly preferred initiators for the preparation of the high functionality, high molecular weight polyols comprise sucrose, dextrose, sorbitol, α-methylglucoside, α-hydroxyethylglucoside which may be employed separately or in combination with other initiators such as glycerine or water.

The polyols may be prepared by methods well-known in the art such as taught by Wurtz, *The Encyclopaedia of Chemical Technology*, Vol. 7, p. 257-266, Interscience Publisher Inc. (1951) and U.S. Patent 1,922,459. Polyols can be prepared by reacting, advantageously in the presence of an oxyalkylation catalyst, the initiator with an alkylene oxide. A wide variety of oxyalkylation catalysts may be employed to promote the reaction between the initiator and the alkylene oxide. It is preferred to use as an oxyalkylation catalyst a basic compound such as, for example, an alkali metal hydroxide, e.g., sodium or potassium hydroxide, or a tertiary amine such as trimethylamine.

The reaction is generally conducted at a temperature of from 60°C to 160°C, preferably from 85°C to 130°C, and is allowed to proceed using such a proportion of alkylene oxide to initiator so as to obtain a polyol component having a hydroxyl number of from 100 to 500, preferably from 100 to 400, more preferably from 140 to 340 and most preferably from 200 to 340. The hydroxyl number range of 100 to 500 corresponds to an equivalent weight range of 112 to 560. The lower hydroxyl number polyols are generally preferred because of their inherently lower viscosities due to a greater alkylene oxide content. Typically, a carbohydrate initiated polyol having an average hydroxyl number of from, for example, 140 to 340 will have an alkylene oxide content, which when propylene oxide represents a product having from approximately 2 to 6 propylene oxide units per active hydrogen atom of the initiator.

Polyols having a hydroxyl number greater than 500 when used as the above-described polyol component of the polyol composition in the process according to this invention frequently give foams exhibiting brittleness and friability, and those having a hydroxyl number of lower than 100 give foams exhibiting poor compressive strengths.

The alkylene oxides which may be used in the preparation of the polyol include any compound having a cyclic ether group, preferably an α,β-oxirane, and is unsubstituted or alternatively substituted with inert groups which do not chemically react under the conditions encountered whilst preparing a polyol. Examples of suitable alkylene oxides include ethylene oxide, propylene oxide, 1,2- or 2,3-butylene oxide, the various isomers of hexane oxide, styrene oxide, epichlorohydrin, epoxychlorohexane and epoxychloropentane. Most preferred, on the basis of performance, availability and cost are ethylene oxide, propylene oxide, butylene oxide and mixtures thereof, with ethylene oxide, propylene oxide, or mixtures thereof being most preferred. When polyols are prepared with combinations of alkylene oxides, the alkylene oxides may be reacted as a complete mixture providing a random distribution of oxyalkylene units within the oxide chain of the polyol or alternatively they may be reacted in a step-wise manner so as to provide a block distribution within the oxyalkylene chain of the polyol.

By way of example, but not limitation, such polyols that may be used in accordance with the process of this invention include a sucrose-initiated oxypropylene polyol having an average hydroxyl number of from 180 to 220, a sorbitol-initiated oxypropylene polyol having an average hydroxyl number of from 250 to 290, a sorbitol-glycerine initiated oxypropylene polyol having nominally an average of 4.0 to 4.4 active hydrogen atoms per molecule and a hydroxyl number of from 250 to 290.

The polyol composition contains the high functionality, high molecular weight polyol component in a quantity sufficient to allow the preparation of low friability, good dimensionally stable and strong foams. The polyol component comprises
at least 50 percent and most preferably at least 70 percent and up to 100 percent of the total weight of polyol composition. Optionally, the polyol composition may comprise one or more additional polyols in not more than 50 percent and most preferably less than 30 percent by weight of the total weight of the polyol composition. When an optional polyol is present, this polyol is different from the first polyol component.

The average hydroxyl number of the polyol composition comprising the polyol component is from 100 to 500, preferably from 140 to 400, more preferably from 140 to 340 and most preferably from 200 to 340. Use of a polyol composition having an average hydroxyl number outside these limits leads either to foams with very low compressive strength or alternatively high friability.

Suitable additional polyols are those normally employed in the preparation of rigid polyurethane foams and include polyether polyols, polyester polyols, polyhydroxy-terminated acetal resins, hydroxy-terminated amines and polyamines. Preferred for preparing rigid polyurethane foams are those optional polyols having nominally from 2 to 8, preferably from 3 to 8 active hydrogen atoms per molecule and having a hydroxyl number of from 50 to 800, preferably from 50 to 500, and more preferably from 50 to 250. Exemplary of such polyols include those commercially available under the product name Voranol™ and include polyols such as Voranol RN411, Voranol RN490, Voranol RA640, Voranol RA475, Voranol 260, Voranol 450, Voranol P1010, and Voranol CP 1055 sold by The Dow Chemical Company.

In preparing foams by the process according to the invention, the above described polyol composition is reacted with an organic polyisocyanate. Polyisocyanates useful in making polyurethane foams include aromatic, aliphatic and cycloaliphatic polyisocyanates and combinations thereof. Representative of these types are diisocyanates such as m- or p-phenylene diisocyanate, toluene-2,4-diisocyanate, toluene-2,6-diisocyanate, hexamethylene-1,6-diisocyanate, tetramethylene-1,4 -diisocyanate, cyclohexane-1,4-diisocyanate, hexahydrotoluene diisocyanate (and isomers), naphthylene-1,5 -diisocyanate, 1-methylphenyl-2,4-phenyl diisocyanate, diphenylmethane-4,4'-diisocyanate, diphenylmethane-2,4' -diisocyanate, 4,4'-biphenylene diisocyanate, 3,3' -dimethoxy-4,4'-biphenylene diisocyanate and 3,3' -dimethyldiphenylpropane-4,4'-diisocyanate; triisocyanates such as toluene-2,4,6-triisocyanate and polyisocyanates such as 4,4'-dimethyldiphenylmethane-2,2',5'5' -tetraisocyanate and the diverse polymethylenepolyphenylpolyisocyanates.

A crude polyisocyanate may also be used in making polyurethanes, such as the crude toluene diisocyanate obtained by the phosgenation of a mixture of toluene diamines or the crude diphenylmethane diisocyanate obtained by the phosgenation of crude diphenylmethanediamine. The preferred undistilled or crude polyisocyanates are disclosed in U.S. Patent 3,215,652.

For making rigid polyurethanes polymethylene polyphenylpolyisocyanates, having an average functionality of from 2.4 to 3.1 isocyanate moieties per molecule are used, due to their ability to cross-link the polyurethane. The isocyanate index ratio of isocyanates groups to active hydrogen-atoms present is from 1.0 to 1.5.

In preparing rigid foam, a foaming or blowing agent is employed to confer a cellular structure to the polymer. Water is used to generate carbon dioxide by reaction with isocyanate to provide at least 40 mole percent, preferably from 50 to 80 mole percent and more preferably from 50 to 70 mole percent of the theoretical total cell-gas composition in the foams. For the purpose of this invention, the theoretical gas composition is calculated on the basis of the molar quantities of gases which can be present in the closed-cell and which are generated chemically or result from thermal decomposition or boiling of blowing agents present in the reactive mixture. Optionally, other blowing agents may be used in addition to the water and include low boiling halocarbons, such as fluorocarbons and chlorofluorocarbons, finally divided solids such as pecan flour, and the so-called "azo" blowing agents which liberate nitrogen. Exemplary of such halocarbons are, for example, methylene chloride, trichlorofluoromethane, dichlorodifluoromethane, trichloroethane, and the ethane-derived chlorofluorocarbons such as, for example, Refrigerants R-123, R-141b, and R-142b.

Water is employed to provide the blowing requirement for preparation of the polyurethane foam, in an amount ranging from 2.5 to 10, preferably from 3.5 to 8.0 and more preferably from 4.0 to 7.0 percent by weight of total weight of the polyol composition.

Such quantities of water and optionally other additional blowing agents provide foams having an average density of from 15 to 40, preferably from 15 to 35, more preferably from 15 to 30 and most preferably from 24 to 30 kg/m³.

Other components useful in producing polyurethanes include surfactants, pigments, colorants, fillers, anti-oxidants, flame retardants, and stabilizers.

When preparing polyisocyanate-based foams, it is generally advantageous to employ a minor amount of a surfactant sufficient to stabilize the foaming reaction mixture until it obtains rigidity avoiding formation of large, uneven cells or even total collapse of the foam. Such surfactants advantageously comprise a liquid or solid organosilicon compound. Other, less preferred surfactants include polyethylene glycol ethers of long chain alcohols, tertiary amine or alkanolamine salts of long chain alkyl acid sulfate esters, alkylsulfonic esters, alkylarylsulfonic acids. Typically, from 0.2 to 5.0 parts of the surfactant per 100 parts per weight polyol composition are sufficient for this purpose.

One or more catalysts for promoting the reaction of the polyol composition with the polyisocyanate are advantageously used. Any suitable catalyst promoting formation of the urethane linkage may be used, including tertiary amine compounds and organometallic compounds. Exemplary tertiary amine compounds include triethylenediamine, N-methylmorpholine, pentamethyldiethylenetriamine, dimethylcyclohexylamine, tetramethylethylenediamine, 1-methyl-4-dimethylaminoethylpiperazine, 3-methoxy-N-dimethylpropylamine, N-ethylmorpholine, diethylethanolamine, N-cocomorpholine, N,N-dimethyl-N′,N′-dimethylisopropylpropylenediamine, N,N-diethyl-3-diethylaminopropylamine and dimethylbenzylamine. Exemplary organometallic catalysts include organomercury, organolead, organoferric and organotin catalysts, with organotin catalysts being preferred among these. Suitable organotin catalysts include tin salts of carboxylic acids such as dibutyltin di-2-ethyl hexanoate, as well as other organometallic compounds such as are disclosed in U.S. Patent 2,846,408. Metal salts such as stannous chloride can also function as catalysts for promoting the urethane reaction. A catalyst for promoting the trimerization of polyisocyanates, such as an alkali metal alkoxide or carboxylate, may also optionally be employed herein. Such catalysts are used in an amount which measurably increases the rate of reaction of the polyisocyanate. Typical amounts are 0.01 to 1 part of catalyst per 100 parts by weight of polyol.

The components described may be employed to produce rigid polyurethane and polyurethane-modified isocyanurate foam. The polyol composition comprising the polyol component is reacted with an organic polyisocyanate advantageously in the presence of blowing agent, catalyst, surfactant, additives, and fillers. The rigid foams prepared according to the process of this invention may be made in a one-step process by reacting all the ingredients together at once, or foams can be made by the so-called "quasi-prepolymer method." In the one-shot process where foaming is carried out in machines, the components bearing active hydrogen atoms, catalyst, surfactants, blowing agents and optional additives may be introduced separately to the mixing head where they are combined with the polyisocyanate to give the polyurethane-forming mixture. The mixture may be poured or injected into a suitable container or molded as required. For use of machines with a limited number of component lines into the mixing head, a premix of all the components except the polyisocyanate (and supplementary blowing agent when a gas is used, to give a polyol formulation) can be advantageously employed. This simplifies the metering and mixing of the reacting components at the time the polyurethane-forming mixture is prepared.

Alternatively, the foams may be prepared by the so-called "quasi-prepolymer" method. In this method a portion of the polyol component is reacted in the absence of catalysts with the polyisocyanate component in proportion so as to provide from 10 percent to 30 percent of free isocyanate groups in the reaction product based on the prepolymer prepared from a polymethylene polyphenyl polyisocyante. To prepare foam, the remaining portion of the polyol is added and the components are allowed to react together in the presence of catalysts and other appropriate additives such as blowing agent and surfactant. Other additives may be added to either the prepolymer or remaining polyol or both prior to the mixing of the components, whereby at the end of the reaction a rigid polyurethane foam is provided.

The polyurethane foam prepared according to the process of this invention is useful in a wide range of applications. Accordingly, not only can rigid appliance foam be prepared but also spray insulation, rigid insulating board stock, laminates and many other types of rigid foam can easily be prepared with the process of this invention.

The following examples are given to illustrate the invention and are not intended to limit the scope thereof. Unless stated otherwise, all parts and percentages are given by weight.

### Examples 1 to 15

Rigid polyurethane foams are prepared according to the invention from the formulations described below in Table I. The foams are prepared using a low pressure machine equipped with a double inlet mixing head fitted with a high shear mixer set to 7,000 rpm. The components are at a temperature 20°C prior to mixing. The properties of the resulting foams are shown in Table II.

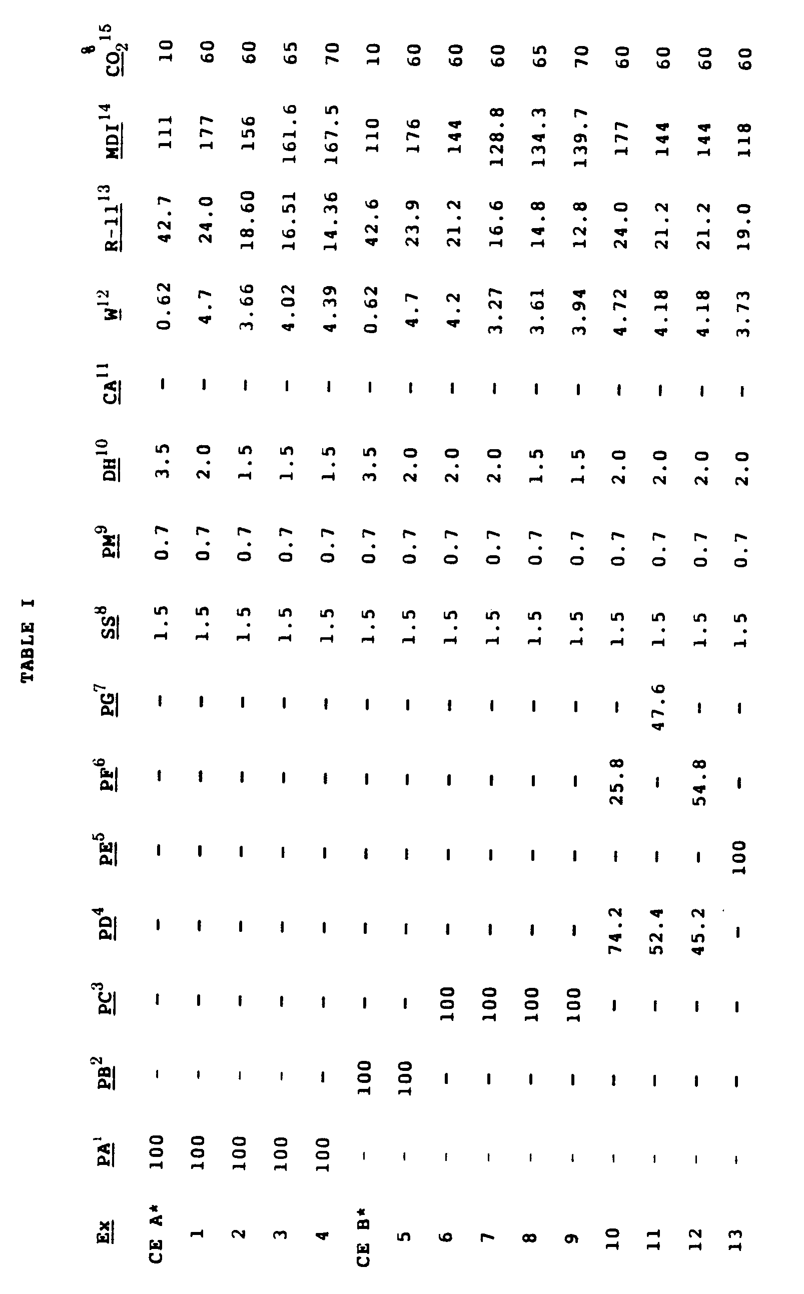

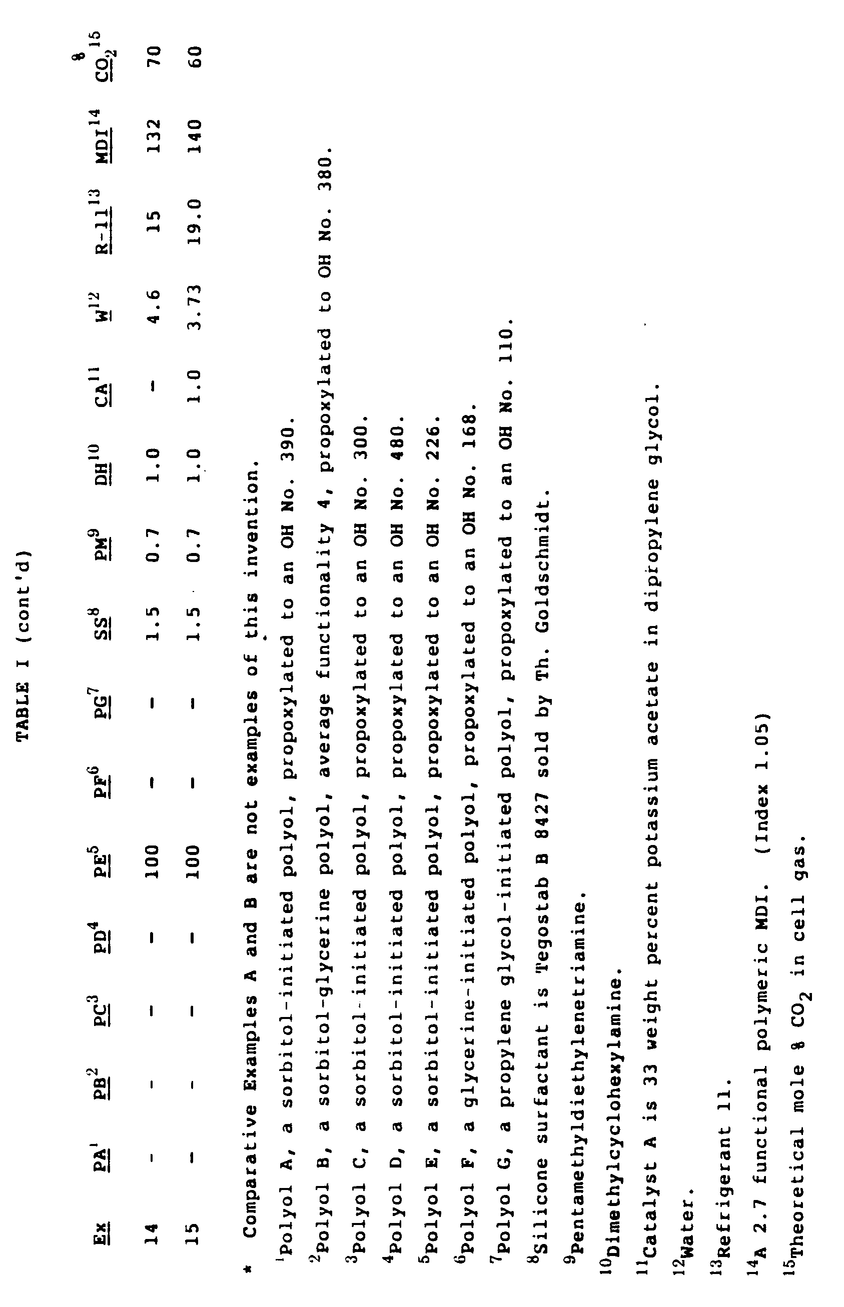

The height/weight measurements and density distribution data are obtained using a 200 x 4 x 6 cm mold preheated to 45°C. The larger the height/weight value the better the flow of the reacting system. The density distribution is a statistical analysis of the foam density obtained when the mold has been overpacked by 10 percent; the lower the value the smaller the variance and foam density over the complete sample.

Post Demold expansion is measured in millimeters in the parallel-to-rise direction on 20 x 20 x 20 cm cube foam, molded to an overall density of about 30 kg/m³. The expansion is observed after a curing time of 10 minutes with one face of the mold having been opened after 3 or 4 minutes curing, lower values of expansion indicate improved demold performance. Compressive strengths are measured in the parallel-to-rise and perpendicular-to-rise directions using 5 x 5 x 5 cm cubes obtained from the core of the larger molded cubes.

K-factor is measured on foam of an overall density of about 30 kg/m³ cut to approximately 2.5 x 18 x 18 cm. K-factor performance is observed in both perpendicular and parallel-to-rise directions. An Anacon Model 88, Thermal Conductivity Analyzer with cold and hot plate temperatures of 10.2 and 37.8°C is employed.

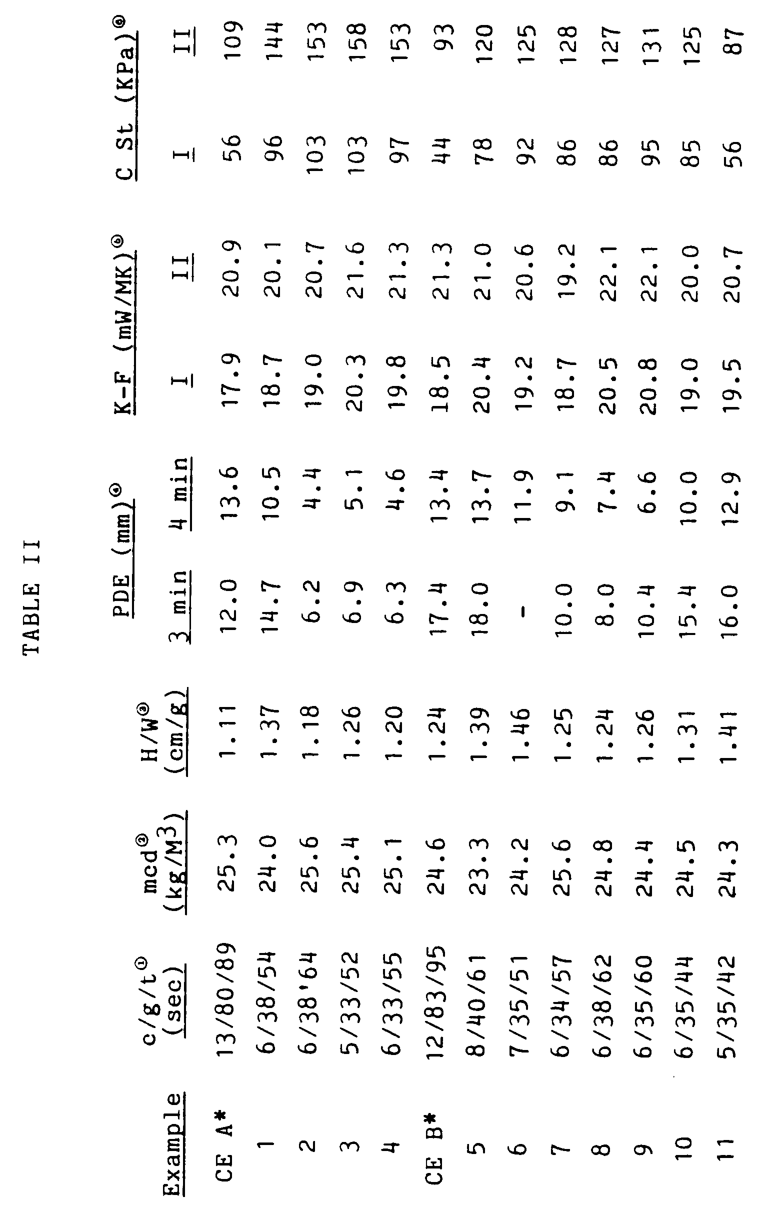

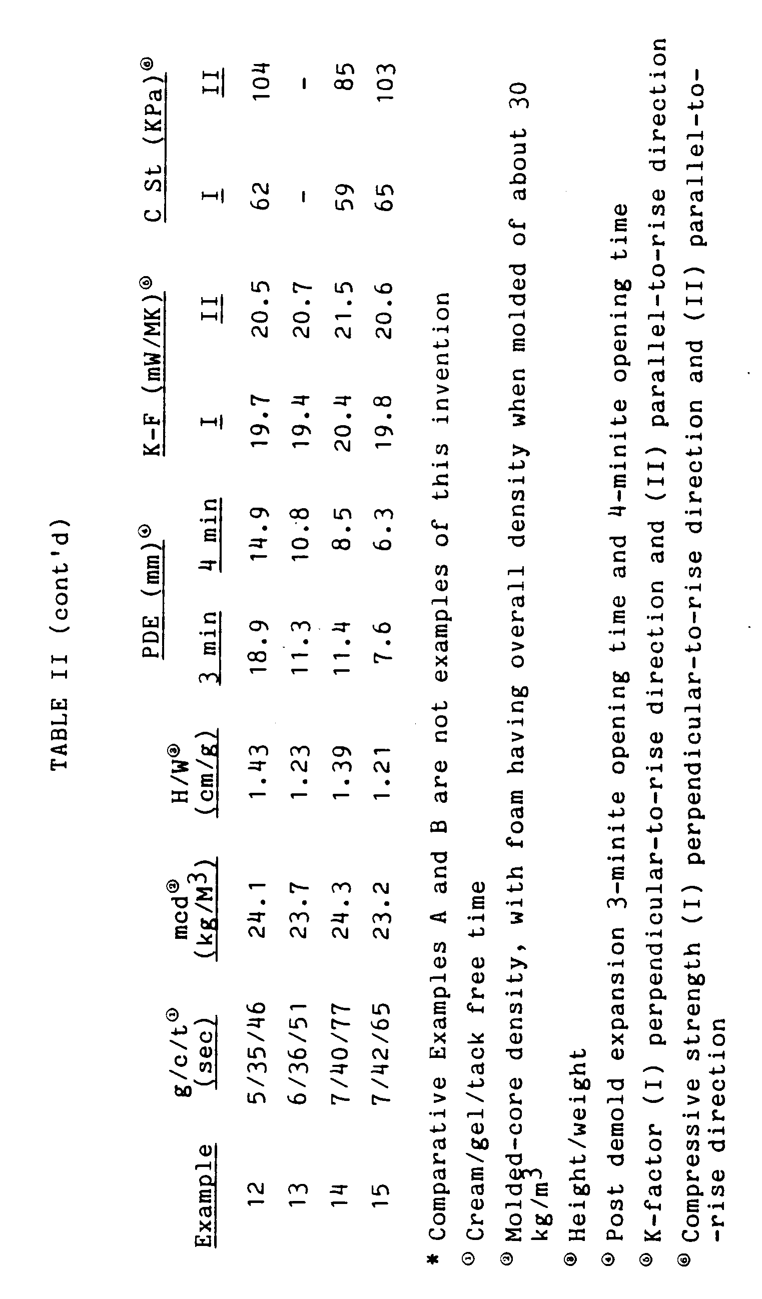

As can be seen from the data in Table II, good quality foam can be prepared according to the process of this invention. In particular it is to be noted thatx the height/weight, post demold expansion and compressive strength remain equivalent or are improved when using the particular polyols as described and when substantial quantities of the hard CFC, refrigerant-11, are substituted by "water" blowing. The K-factor in the parallel-to-rise direction of the examples and comparative foams are largely comparable which is surprising in view of the difference of the average thermal conductivities of the gas mixtures in the closed-cells. At room temperature, refrigerant-11 has a thermal conductivity of about 8.5 mW/MK and carbon dioxide 16.0 mW/MK.

### Examples 16 to 18

These polyurethane foams are prepared according to the process of this invention. Formulation details are given in Table III and foam property data in Table IV. These examples illustrate the use of the invention in preparing foams, where the reactive mixture contains no volatile, halocarbon, blowing agent.

The thermal insulation performance is observed to deteriorate compared to Example 1 to 15 when refrigerant-11 is totally replaced by water for the blowing of the foam, this can be explained on the change of the average theoretical conductivity of the gas composition present within the cells.

As can be seen from the data of Table IV, foams having acceptable properties can be prepared using a combination of the polyol component as described herein and water as blowing agent in accordance with the process of this invention.

The examples presented hereinabove to illstrate this invention demonstrate the use of high functionality, high equivalent weight polyols as the important component of the polyol composition for preparing rigid polyurethane foams when using water as the means of blowing the foam. The resulting foams have good physical properties including compressive strengths for their given densities.

Formally, high equivalent weight polyols having long oxyalkylene chains, typically greater than 2 alkylene oxide units per active hydrogen atom of the initiator, have not been used to prepare rigid polyurethane foams due to inferior properties of such products especially compressive strengths.

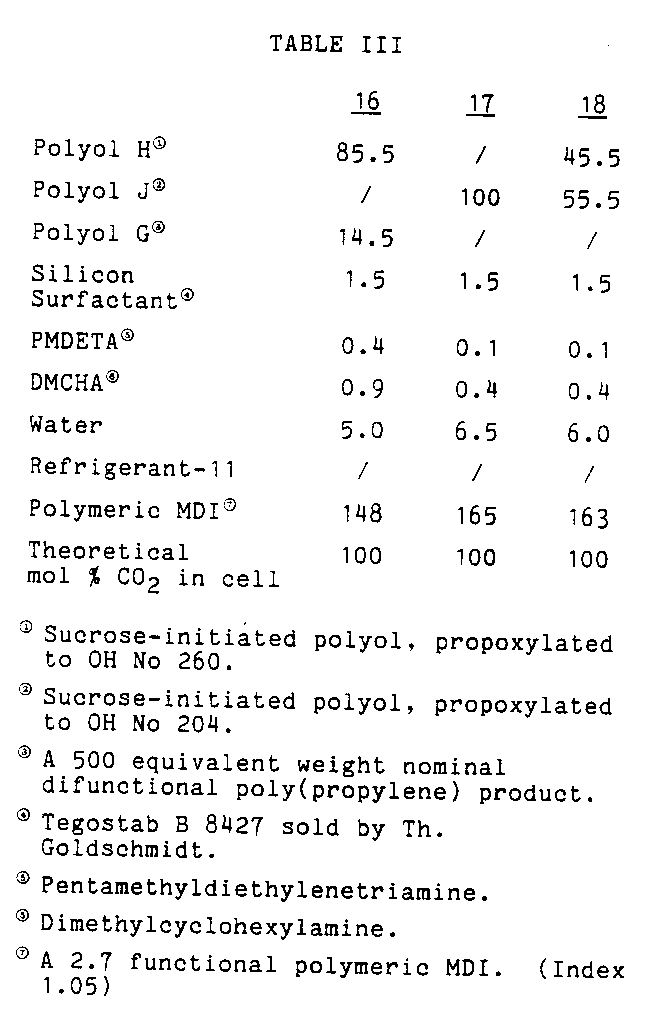

**TABLE IV**

| Foam-Property | 16 | 17 | 18 |
|---|---|---|---|
| cream/gel/tack free time (sec) | 8/35/55 | 15/38/* | 15/71/* |
| Density Kg/M³ | 25.4 | 22.6 | 23.2 |
| Height/Weight (g/cm) | 1.08 | 1.14 | 1.10 |
| Density Distribution | /* | 0.88 | 1.05 |
| Post Demould Expansion (mm) 3 minites | 6.95 | 17.5 | 17.1 |
| 4 minites | 5.30 | 12.3 | 10.7 |
| K-Factor (mW/MK) I | 24.4 | 24.1 | 25.6 |
| II | 26.8 | 27.5 | 29.4 |
| Comp St (KPa) I | 75 | 61 | 62 |
| II | 133 | 101 | 113 |

| | | | |
|---|---|---|---|
| * Not observed. | | | |
| I: Perpendicular to rise direction. II: Parallel to rise direction. | | | |

### Example 19 to 21

Polyurethane foams are prepared according to the process of this invention employing aromatic-initiated polyols as principal component of the formulation. Formulation details are disclosed in Table V and physical properties of the resulting foams in Table VI.

**Table V**

| (parts by weight) | | | |
|---|---|---|---|
| | 19 | 20 | 21 |
| Aromatic Polyol A | 50 | / | / |
| Aromatic Polyol B | / | 50 | 50 |
| Voranol™ RA640 | 25 | 25 | 25 |
| Voranol™ P1010 | 10 | 10 | 10 |
| Voranol™ CP260 | 15 | 15 | 15 |
| Average hydroxyl number | 461 | 400 | 400 |
| Silicone Surfactant | 1.2 | 1.2 | 1.2 |
| DMCMA | 0.25 | 0.25 | 0.25 |
| Niax A-1 | 0.1 | 0.1 | 0.1 |
| C 206 | 0.25 | 0.25 | 0.25 |
| Water | 2.75 | 2.75 | 4.0 |
| Refrigerant - 11 | 12 | 18 | - |
| Polymeric MDI/Index | 243/1.75 | 229/1.65 | 200/1.25 |
| Theoretical Mole % CO₂ in cell | 64 | 54 | 100 |
| Aromatic Polyol A - an oxypropylene/oxyethylene (50%) alkoxylated polymeric methylene diphenylamine-initiated polyol average functionality 4.6, average hydroxyl number 380 Aromatic Polyol B - as for aromatic polyol A, oxyethylene content (33%) average hydroxyl number 270 Niax A-1, proprietary tin-containing urethane catalyst sold by Union Carbide C-206, proprietary quaternary amine isocyanatetrimerization catalyst sold by The Dow Chemical Company. | | | |

All other components of the formulation are as previously described.

**Table VI**

| | 19 | 20 | 21 |
|---|---|---|---|
| Cream/gel tack Free time | 15/45/66 | 15/65/105 | 15/42/62 |
| (sec) | | | |
| Free-rise density kg/M3 | 27.1 | 27.7 | 27.8 |
| Comp. St (kPa) | 87 | 88 | 90 |
| I | 168 | 151 | 143 |
| II | | | |
| K-Factor (I) (mW/mk) | 20.4 | 19.0 | 22.6 |
| Molded density | 31.3 | 31.4 | 33.5 |
| Comp St (kPa) | 128 | 131 | 138 |
| I | 243 | 171 | 235 |
| II | | | |
| K-Factor-I (mW/mk) | 19.8 | 18.5 | 22.5 |
| I: perpendicular-to-rise direction of foam. II: parallel-to-rise direction of foam. | | | |

## Claims (Claims for the following Contracting State(s): AT, BE, CH, DE, FR, GB, GR, IT, LI, LU, NL, SE)

1. A process for preparing a rigid closed-cell polyisocyanate-based polymer having an average density of from 15 to 40 kg/m³, by subjecting to foaming conditions a reactive mixture comprising an organic polyisocyanate, a polyol composition, and a blowing agent characterized in that:
(a) the polyol composition has an average hydroxyl number of from 100 to 500 and comprises at least 50 percent by weight of the total weight of the polyol composition of a polyol component having an average hydroxyl number of from 100 to 500, an average functionality of from 4 to 8 and being the product of reacting an alkylene oxide with a carbohydrate or carbohydrate mixture additionally containing water, glycerine or trimethylolpropane; or an aromatic initiator containing at least 4 active hydrogen atoms per molecule;
(b) the blowing agent comprises water in an amount of from 2.5 to 10 percent by weight of the total weight of the polyol composition and being sufficient to provide at least 40 theoretical mole percent carbon dioxide, by reaction with the polyisocyanate, of the total gases present in the closed-cells of the resulting polymer; and
(c) the polyisocyanate, present in an amount so as to provide from 1 to 1.5 isocyanate groups per active hydrogen atom present in the polyol composition and water, is a polymethylene polyphenyl polyisocyanate having an average functionality of from 2.4 to 3.1.

2. A process as claimed in Claim 1 wherein the carbohydrate is lactose, α-methylglucoside, α-hydroxyethylglucoside, hexitol, heptitol, sorbitol, dextrose, mannitol, or sucrose.

3. A process as claimed in Claim 2 wherein the alkylene oxide is ethylene oxide, propylene oxide, 1,2-butylene oxide or 2,3-butylene oxide.

4. A process as claimed in any one of the preceding claims wherein the polyol component of the polyol composition has an average hydroxyl number of from 100 to 400 and is present in at least 50 percent by weight of the total weight of the polyol composition.

5. A process as claimed in any one of the preceding claims wherein the polyol component of the polyol composition has an average hydroxyl number of from 140 to 340 and is present in at least 70 percent by weight of the total weight of the polyol composition.

6. A process as claimed in Claim 4 wherein the average hydroxyl number of the polyol composition is from 100 to 400.

7. A process as claimed in Claim 5 wherein the average hydroxyl number of the polyol composition is from 140 to 340.

8. A process as claimed in any one of the preceding claims wherein the blowing agent comprises water in a quantity sufficient to provide from 50 to 80 theoretical mole percent carbon dioxide content of gases present in the closed-cells.

9. A polyisocyanate-based foam prepared according to the process of any one of the preceding claims.

## Claims (Claims for the following Contracting State(s): ES)

1. A process for preparing a rigid closed-cell polyisocyanate-based polymer having an average density of from 15 to 40 kg/m³, by subjecting to foaming conditions a reactive mixture comprising an organic polyisocyanate, a polyol composition, and a blowing agent characterized in that:
(a) the polyol composition has an average hydroxyl number of from 100 to 500 and comprises at least 50 percent by weight of the total weight of the polyol composition of a polyol component having an average hydroxyl number of from 100 to 500, an average functionality of from 4 to 8 and being the product of reacting an alkylene oxide with a carbohydrate or carbohydrate mixture additionally containing water, glycerine or trimethylolpropane; or an aromatic initiator containing at least 4 active hydrogen atoms per molecule;
(b) the blowing agent comprises water in an amount of from 2.5 to 10 percent by weight of the total weight of the polyol composition and being sufficient to provide at least 40 theoretical mole percent carbon dioxide, by reaction with the polyisocyanate, of the total gases present in the closed-cells of the resulting polymer; and
(c) the polyisocyanate, present in an amount so as to provide from 1 to 1.5 isocyanate groups per active hydrogen atom present in the polyol composition and water, is a polymethylene polyphenyl polyisocyanate having an average functionality of from 2.4 to 3.1.

2. A process as claimed in Claim 1 wherein the carbohydrate is lactose, α-methylglucoside, α-hydroxyethylglucoside, hexitol, heptitol, sorbitol, dextrose, mannitol, or sucrose.

3. A process as claimed in Claim 2 wherein the alkylene oxide is ethylene oxide, propylene oxide, 1,2-butylene oxide or 2,3-butylene oxide.

4. A process as claimed in any one of the preceding claims wherein the polyol component of the polyol composition has an average hydroxyl number of from 100 to 400 and is present in at least 50 percent by weight of the total weight of the polyol composition.

5. A process as claimed in any one of the preceding claims wherein the polyol component of the polyol composition has an average hydroxyl number of from 140 to 340 and is present in at least 70 percent by weight of the total weight of the polyol composition.

6. A process as claimed in Claim 4 wherein the average hydroxyl number of the polyol composition is from 100 to 400.

7. A process as claimed in Claim 5 wherein the average hydroxyl number of the polyol composition is from 140 to 340.

8. A process as claimed in any one of the preceding claims wherein the blowing agent comprises water in a quantity sufficient to provide from 50 to 80 theoretical mole percent carbon dioxide content of gases present in the closed-cells.

## Patentansprüche (Patentansprüche für folgende(n) Vertragsstaat(en): AT, BE, CH, DE, FR, GB, GR, IT, LI, LU, NL, SE)

1. Verfahren zum Herstellen eines steifen geschlossen-zelligen auf Polisocyanat basierenden Polymers mit einer mittleren Dichte von 15 bis 40 kg/m³ durch Unterwerfen eines reaktiven Gemisches, welches ein organisches Polyisocyanat, eine Polyolzusammensetzung und ein Treibmittel umfaßt, unter Schäumungsbedingungen,
dadurch gekennzeichnet, daß
(a) die Polyolzusammensetzung eine mittlere Hydroxylzahl von 100 bis 500 hat und mindestens 50 % bezüglich des Gewichts des Gesamtgewichts der Polyolzusammensetzung einer Polyolkomponente umfaßt mit einer mittleren Hydroxylzahl von 100 bis 500, einer mittleren Funktionalität von 4 bis 8 und das das Produkt ist des Umsetzens eines Alkylenoxids mit einem Kohlenhydrat oder Kohlenhydratgemisch, welches zusätzlich Wasser, Glycerin oder Trimethylolpropan enthält oder einen aromatischen Initiator, der mindestens 4 aktive Wasserstoffatome pro Molekül enthält,
(b) das Treibmittel Wasser umfaßt in einer Menge von 2,5 bis 10 % bezüglich des Gewichts des Gesamtgewichts der Polyolzusammensetzung und ausreichend ist, um durch Reaktion mit dem Polyisocyanat mindestens 40 theoretische Mol-% Kohlendioxid der gesamten in den geschlossenen Zellen des resultierenden Polymers vorliegenden Gase bereitzustellen und
(c) das Polyisocyanat, welches in einer Menge vorliegt um von 1 bis 1,5 Isocyanatgruppen pro aktivem Wasserstoffatom in der Polyolzusammensetzung und Wasser bereitzustellen, ein Polymethylenpolyphenylpolyisocyanat mit einer mittleren Funktionalität von 2,4 bis 3,1 ist.

2. Verfahren nach Anspruch 1, worin das Carbohydrat Lactose, α-Methylglucosid, α-Hydroxyethylglucosid, Hexitol, Heptitol, Sorbitol, Dextrose, Mannitol oder Sucrose ist.

3. Verfahren nach Anspruch 2, worin das Alkylenoxid Ethylenoxid, Propylenoxid, 1,2-Butylenoxid oder 2,3-Butylenoxid ist.

4. Verfahren nach einem der vorhergehenden Ansprüche, worin die Polyolkomponente der Polyolzusammensetzung eine mittlere Hydroxylzahl von 100 bis 400 hat und in mindestens 50 % bezüglich des Gewichts des Gesamtgewichts der Polyolzusammensetzung vorliegt.

5. Verfahren nach einem der vorhergehenden Ansprüche, worin die Polyolkomponente der Polyolzusammensetzung eine mittlere Hydroxylzahl von 140 bis 340 hat und in mindestens 70 % bezüglich des Gewichts des Gesamtgewichts der Polyolzusammensetzung vorliegt.

6. Verfahren nach Anspruch 4, worin die mittlere Hydroxylzahl der Polyolzusammensetzung von 100 bis 400 ist.

7. Verfahren nach Anspruch 5, worin die mittlere Hydroxylzahl der Polyolzusammensetzung von 140 bis 340 ist.

8. Verfahren nach einem der vorhergehenden Ansprüche, worin das Treibmittel Wasser in einer Menge umfaßt, welche ausreichend ist, um von 50 bis 80 theoretische Mol-% Kohlendioxidgehalt der in den geschlossenen Zellen vorliegenden Gase bereitzustellen.

9. Auf Polyisocanat basierender Schaum, welcher gemäß dem Verfahren nach einem der vorhergehenden Ansprüche hergestellt wurde.

## Patentansprüche (Patentansprüche für folgende(n) Vertragsstaat(en): ES)

1. Verfahren zum Herstellen eines steifen geschlossen-zelligen auf Polisocyanat basierenden Polymers mit einer mittleren Dichte von 15 bis 40 kg/m³ durch Unterwerfen eines reaktiven Gemisches, welches ein organisches Polyisocyanat, eine Polyolzusammensetzung und ein Treibmittel umfaßt, unter Schäumungsbedingungen,
dadurch gekennzeichnet, daß
(a) die Polyolzusammensetzung eine mittlere Hydroxylzahl von 100 bis 500 hat und mindestens 50 % bezüglich des Gewichts des Gesamtgewichts der Polyolzusammensetzung einer Polyolkomponente umfaßt mit einer mittleren Hydroxylzahl von 100 bis 500, einer mittleren Funktionalität von 4 bis 8 und das das Produkt ist des Umsetzens eines Alkylenoxids mit einem Kohlenhydrat oder Kohlenhydratgemisch, welches zusätzlich Wasser, Glycerin oder Trimethylolpropan enthält oder einen aromatischen Initiator, der mindestens 4 aktive Wasserstoffatome pro Molekül enthält,
(b) das Treibmittel Wasser umfaßt in einer Menge von 2,5 bis 10 % bezüglich des Gewichts des Gesamtgewichts der Polyolzusammensetzung und ausreichend ist, um durch Reaktion mit dem Polyisocyanat mindestens 40 theoretische Mol-% Kohlendioxid der gesamten in den geschlossenen Zellen des resultierenden Polymers vorliegenden Gase bereitzustellen und
(c) das Polyisocyanat, welches in einer Menge vorliegt um von der Polyolzusammensetzung und Wasser bereitzustellen, ein Polymethylenpolyphenylpolyisocyanat mit einer mittleren Funktionalität von 2,4 bis 3,1 ist.

2. Verfahren nach Anspruch 1, worin das Carbohydrat Lactose, α-Methylglucosid, α-Hydroxyethylglucosid, Hexitol, Heptitol, Sorbitol, Dextrose, Mannitol oder Sucrose ist.

3. Verfahren nach Anspruch 2, worin das Alkylenoxid Ethylenoxid, Propylenoxid, 1,2-Butylenoxid oder 2,3-Butylenoxid ist.

4. Verfahren nach einem der vorhergehenden Ansprüche, worin die Polyolkomponente der Polyolzusammensetzung eine mittlere Hydroxylzahl von 100 bis 400 hat und in mindestens 50 % bezüglich des Gewichts des Gesamtgewichts der Polyolzusammensetzung vorliegt.

5. Verfahren nach einem der vorhergehenden Ansprüche, worin die Polyolkomponente der Polyolzusammensetzung eine mittlere Hydroxylzahl von 140 bis 340 hat und in mindestens 70 % bezüglich des Gewichts des Gesamtgewichts der Polyolzusammensetzung vorliegt.

6. Verfahren nach Anspruch 4, worin die mittlere Hydroxylzahl der Polyolzusammensetzung von 100 bis 400 ist.

7. Verfahren nach Anspruch 5, worin die mittlere Hydroxylzahl der Polyolzusammensetzung von 140 bis 340 ist.

8. Verfahren nach einem der vorhergehenden Ansprüche, worin das Treibmittel Wasser in einer Menge umfaßt, welche ausreichend ist, um von 50 bis 80 theoretische Mol-% Kohlendioxidgehalt der in den geschlossenen Zellen vorliegenden Gase bereitzustellen.

## Revendications (Revendications pour l'(les) Etat(s) contractant(s) suivant(s): AT, BE, CH, DE, FR, GB, GR, IT, LI, LU, NL, SE)

1. Procédé de préparation d'un polymère rigide à cellules fermées et à base d'isocyanates ayant une masse volumique moyenne comprise entre 15 et 40 kg/m³, consistant à soumettre un mélange réactionnel contenant un polyisocyanate organique, une composition de polyol et un agent d'expansion à des conditions d'expansion, caractérisé en ce que
(a) la composition de polyol a un indice d'hydroxyle moyen compris entre 100 et 500 et contient au moins 50 % en poids, par rapport au poids total de la composition de polyol, d'un composant polyol ayant un indice d'hydroxyle moyen compris entre 100 et 500, une fonctionnalité moyenne comprise entre 4 et 8 et qui est le produit de la réaction d'un oxyde d'alkylène avec un hydrate de carbone ou un mélange d'hydrate de carbone contenant en plus de l'eau, de la glycérine, du triméthylolpropane ou un amorceur aromatique comportant au moins 4 atomes d'hydrogène actif par molécule,
(b) l'agent d'expansion contient de l'eau en une quantité comprise entre 2,5 et 10 % en poids, par rapport au poids total de la composition de polyol, et suffisante pour fournir, par réaction avec le polyisocyanate, au moins 40 % en moles théoriques de la teneur en dioxyde de carbone des gaz présents dans les cellules fermées du polymère résultant, et
(c) le polyisocyanate, présent en une quantité permettant de fournir de 1 à 1,5 groupes d'isocyanate par atome d'hydrogène actif présent dans la composition de polyol et dans l'eau, est un polyméthyle-polyphénylène-polyisocyanate ayant une fonctionnalité moyenne comprise entre 2,4 et 3,1.

2. Procédé conforme à la revendication 1 dans lequel l'hydrate de carbone est le lactose, l'α-méthylglucoside, l'α-hydroxyéthylglucoside, l'hexitol, l'heptitol, le sorbitol, le dextrose, le mannitol ou le saccharose.

3. Procédé conforme à la revendication 2 dans lequel l'oxyde d'alkylène est l'oxyde d'éthylène, l'oxyde de propylène, le 1,2-époxybutane ou le 2,3-époxybutane.

4. Procédé conforme à une quelconque des revendications précédentes dans lequel le composant polyol de la composition de polyol a un indice d'hydroxyle moyen compris entre 100 et 400 et est présent au moins à raison de 50 % en poids par rapport au poids total de la composition polyol.

5. Procédé conforme à une quelconque des revendications précédentes, dans lequel le composant polyol de la composition de polyol a un indice d'hydroxyle moyen compris entre 140 et 340 et est présent au moins à raison de 70 % en poids par rapport au poids total de la composition polyol.

6. Procédé conforme à la revendication 4 dans lequel l'indice d'hydroxyle moyen de la composition de polyol est compris entre 100 et 400.

7. Procédé conforme à la revendication 4 dans lequel l'indice d'hydroxyle moyen de la composition de polyol est compris entre 140 et 340.

8. Procédé conforme à une quelconque des revendications précédentes dans lequel l'agent d'expansion contient de l'eau en une quantité suffisante pour fournir de 50 à 80 % en moles théoriques de la teneur en dioxyde de carbone des gaz présents dans les cellules fermées.

9. Mousse à base de polyisocyanates préparée selon le procédé conforme à une quelconque des revendications précédentes.

## Revendications (Revendications pour l'(les) Etat(s) contractant(s) suivant(s): ES)

1. Procédé de préparation d'un polymère rigide à cellules fermées et à base d'isocyanates ayant une masse volumique moyenne comprise entre 15 et 40 kg/m³, consistant à soumettre un mélange réactionnel contenant un polyisocyanate organique, une composition de polyol et un agent d'expansion à des conditions d'expansion, caractérisé en ce que
(a) la composition de polyol a un indice d'hydroxyle moyen compris entre 100 et 500 et contient au moins 50 % en poids, par rapport au poids total de la composition de polyol, d'un composant polyol ayant un d'indice d'hydroxyle moyen compris entre 100 et 500, une fonctionnalité moyenne comprise entre 4 et 8 et qui est le produit de la réaction d'un oxyde d'alkylène avec un hydrate de carbone ou un mélange d'hydrate de carbone contenant en plus de l'eau, de la glycérine, du triméthylolpropane ou un amorceur aromatique comportant au moins 4 atomes d'hydrogène actif par molécule,
(b) l'agent d'expansion contient de l'eau en une quantité comprise entre 2,5 et 10 % en poids, par rapport au poids total de la composition de polyol, et suffisante pour fournir, par réaction avec le polyisocyanate, au moins 40 % en moles théoriques de la teneur en dioxyde de carbone des gaz présents dans les cellules fermées du polymère résultant, et
(c) le polyisocyanate, présent en une quantité permettant de fournir de 1 à 1,5 groupes d'isocyanate par atome d'hydrogène actif présent dans la composition de polyol et dans l'eau, est un polyméthyle-polyphénylène-polyisocyanate ayant une fonctionnalité moyenne comprise entre 2,4 et 3,1.

2. Procédé conforme à la revendication 1 dans lequel l'hydrate de carbone est le lactose, l'α-méthylglucoside, l'α-hydroxyéthylglucoside. l'hexitol, l'heptitol, le sorbitol, le dextrose, le mannitol ou le saccharose.

3. Procédé conforme à la revendication 2 dans lequel l'oxyde d'alkylène est l'oxyde d'éthylène, l'oxyde de propylène, le 1,2-époxybutane ou le 2,3-époxybutane.

4. Procédé conforme à une quelconque des revendications précédentes dans lequel le composant polyol de la composition de polyol a un indice d'hydroxyle moyen compris entre 100 et 400 et est présent au moins à raison de 50 % en poids par rapport au poids total de la composition polyol.

5. Procédé conforme à une quelconque des revendications précédentes, dans lequel le composant polyol de la composition de polyol a un indice d'hydroxyle moyen compris entre 140 et 340 et est présent au moins à raison de 70 % en poids par rapport au poids total de la composition polyol.

6. Procédé conforme à la revendication 4 dans lequel l'indice d'hydroxyle moyen de la composition de polyol est compris entre 100 et 400.

7. Procédé conforme à la revendication 4 dans lequel l'indice d'hydroxyle moyen de la composition de polyol est compris entre 140 et 340.

8. Procédé conforme à une quelconque des revendications précédentes dans lequel l'agent d'expansion contient de l'eau en une quantité suffisante pour fournir de 50 à 80 % en moles théoriques de la teneur en dioxyde de carbone des gaz présents dans les cellules fermées.
